# EUROPEAN PATENT APPLICATION

(11) **EP 4 822 793 A1**
(43) Date of publication of application: **14.10.2026**
(21) Application number: 25895241.5
(22) Date of filing: 25.08.2025
(51) Int. Cl.: H01M 10/04

(54) **LAMINATE, ELECTRODE ASSEMBLY COMPRISING SAME, AND METHOD FOR MANUFACTURING ELECTRODE ASSEMBLY**

(30) Priority: 19.11.2024 KR 20240165335
(71) Applicant: LG Energy Solution, Ltd., Seoul 07335 (KR)
(72) Inventor: KIM, Wanju, Daejeon 34122 (KR)
(74) Representative: Plasseraud IP
(86) International application number: PCT/KR2025/012931
(87) International publication number: WO 2026/111109

(57) **Abstract**

A method for manufacturing an electrode assembly according to the present disclosure comprises: a step of providing a first electrode sheet coated in which 2n first electrodes are coated on an upper surface of a first current collector along a first direction, a step of providing a second electrode sheet in which n second electrodes are respectively coated on both the upper and lower surfaces of the second current collector so as to face each other along the first direction; a step of providing a separator; a stacking step of sequentially stacking a first electrode sheet, a separator, and a second electrode sheet, wherein the 1st-second electrode of the second electrode sheet is aligned with the 1st-first electrode of the first electrode sheet, and the upper surface of the first current collector faces the separator; wherein after the stacking step, the first electrode sheet comprises: a first portion that overlaps with the second electrode sheet on a plane, and includes n first electrodes among the 2n first electrodes; a second portion that includes the remaining n first electrodes among the 2n first electrodes; and a third portion that connects the first portion and the second portion and is not coated with the first electrodes, and wherein the separator comprises a first separator overlapping with the first portion on a plane, a second separator overlapping the second portion, and a third separator overlapping with the third portion; after the stacking step, a folding step of folding the third portion and the third separator together and locating the second separator and the second portion on the second electrode sheet to thereby form a folded-stacked body; and wherein the folded-stacked body comprises bent portions, the bent portions being defined as portions where the non-coated portions between the n first electrodes of the first portion, the non-coated portions between the n second electrodes of the second electrode sheet, and the non-coated portions between the n first electrodes of the second portion overlap with each other on a plane, after the folding step, a bending step of alternately bending the bent portions of the folded-stacked body in a clockwise direction and a counterclockwise direction to form an electrode assembly.

## Description

### [TECHNICAL FIELD]

### Cross Citation with Related Application(s)

This application claims priority to and the benefit of Korean Patent Application No. 10-2024-0165335, filed on November 19, 2024, the disclosure of which is incorporated herein by reference in its entirety.

The present disclosure relate to a stacked body, an electrode assembly including the same, and a method for manufacturing the same, and more particularly, to a stacked body in which the current collectors of respective electrodes are integrated, an electrode assembly including the same, and a method for manufacturing an electrode assembly with a simplified process.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Based on the shape of a battery case, such a secondary battery is classified into a cylindrical battery where an electrode assembly is built in a cylindrical metal can, a prismatic battery where an electrode assembly is built in a prismatic metal can, and a pouch type battery where an electrode assembly is built in a pouch type case formed of an aluminum laminate sheet.

An electrode assembly has a structure in which a positive electrode and a negative electrode are stacked in the state in which a separator is interposed between the positive electrode and the negative electrode. Based on the stacking method, the electrode assembly may be classified into a jelly-roll (wound) type electrode assembly in which long sheet type positive electrodes and long sheet type negative electrodes are wound in the state in which separators are interposed therebetween, a stack-type electrode assembly in which a plurality of positive electrodes and a plurality of negative electrodes, each of which is cut into predetermined size units, are sequentially stacked in the state in which a plurality of separators are interposed therebetween, and the like.

Conventionally, a stacking method and a Z-stacking method are typically used to manufacture stacked electrode assemblies.

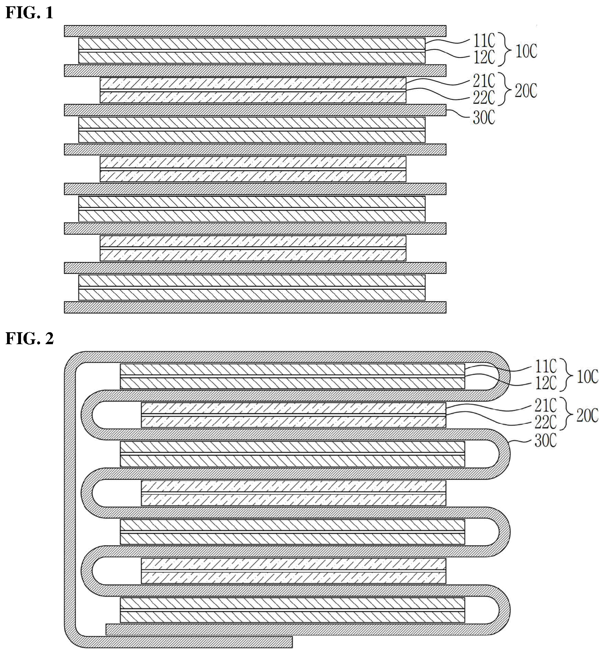

FIG. 1 shows an electrode assembly manufactured by a conventional stacking method.

Referring to FIG. 1, the stacking method is a system in which a negative electrode 10C, a positive electrode 20C and a separator 30C are cut into predetermined size units and provided, and the negative electrode 10C, the positive electrode 20C are alternately stacked with the separator 30C interposed therebetween. As an example, the negative electrode 10C includes a current collector 12C and a negative electrode material 11C disposed on both surfaces thereof, and the positive electrode 20C includes a current collector 22C and a positive electrode material 21C disposed on both surfaces thereof. The separator 30C may be located at the uppermost and lowermost ends of the electrode assembly.

FIG. 2 shows an electrode assembly manufactured by a conventional Z-stacking method.

Referring to FIG. 2, the Z-stacking method is a system in which during the process where the separator 30C unwinding from the wound roll moves from one side to the other side and from the other side to the one side, the cut negative electrode 10C and positive electrode 20C are alternately introduced. As an example, the negative electrode 10C includes a current collector 12C and a negative electrode material 11C disposed on both surfaces thereof, and the positive electrode 20C includes a current collector 22C and a positive electrode material 21C disposed on both surfaces thereof.

That is, the conventionally used stacking method and Z-stacking method commonly utilize the cut negative electrodes 10C and positive electrodes 20C, whereby after forming the electrode assembly, a process of gathering the current collectors of the cut negative electrodes 10C to form tabs and gathering the current collectors of the cut positive electrodes 20C to form tabs was required for normal operation. However, in the process of gathering and welding the current collectors, if part of the current collectors is torn or separated due to a weak welding, there is a problem that electrical connections weaken, battery performance deteriorates or contact resistance increases, causing the amount of heat generation to rise. Furthermore, when the number of electrodes increases, the distance between the uppermost and lowermost current collectors also increases, but there is a limit in increasing the tab length of the current collectors to gather the current collectors together.

Therefore, there is a need to develop a new manufacturing method that can improve manufacturing efficiency in the method for manufacturing a stacked electrode assembly.

### [DETAILED DESCRIPTION OF THE INVENTION]

### [Technical Problem]

It is an object of the present disclosure to provide a stacked body in which the current collectors of respective electrodes are integrated, thereby improving electrical connectivity, and an electrode assembly including the same.

It is another object of the present disclosure to provide a method for manufacturing an electrode assembly that improves manufacturing efficiency by simplifying a conventional method for manufacturing an electrode assembly;

However, the technical objects to be solved by embodiments of the present disclosure are not limited to the above-described objects, and can be variously expanded within the scope of the technical idea included in the present disclosure.

### [Technical Solution]

According to an aspect of the present disclosure, there is provided a method for manufacturing an electrode assembly, the method comprising: a step of providing a first electrode sheet coated in which 2n first electrodes are coated on an upper surface of a first current collector along a first direction, a step of providing a second electrode sheet in which n second electrodes are respectively coated on both the upper and lower surfaces of the second current collector so as to face each other along the first direction; a step of providing a separator; a stacking step of sequentially stacking a first electrode sheet, a separator, and a second electrode sheet, wherein the 1st-second electrode of the second electrode sheet is aligned with the 1st-first electrode of the first electrode sheet, and the upper surface of the first current collector faces the separator; wherein after the stacking step, the first electrode sheet comprises: a first portion that overlaps with the second electrode sheet on a plane, and includes n first electrodes among the 2n first electrodes; a second portion that includes the remaining n first electrodes among the 2n first electrodes; and a third portion that connects the first portion and the second portion and is not coated with the first electrodes, and wherein the separator comprises a first separator overlapping with the first portion on a plane, a second separator overlapping the second portion, and a third separator overlapping with the third portion; after the stacking step, a folding step of folding the third portion and the third separator together and locating the second separator and the second portion on the second electrode sheet to thereby form a folded-stacked body; and wherein the folded-stacked body comprises bent portions, the bent portions being defined as portions where the non-coated portions between the n first electrodes of the first portion, the non-coated portions between the n second electrodes of the second electrode sheet, and the non-coated portions between the n first electrodes of the second portion overlap with each other on a plane, after the folding step, a bending step of alternately bending the bent portions of the folded-stacked body in a clockwise direction and a counterclockwise direction to form an electrode assembly.

In an embodiment, in the bending step, the electrode assembly may be one in which the bent portions are bent so that the folded-stacked body are folded in a zigzag shape.

In an embodiment, in the folded-stacked body, the n first electrodes coated on the first portion may face the n second electrodes coated on the lower surface of the second current collector, with the first separator interposed therebetween, and the n first electrodes coated on the second portion may face the n second electrodes coated on the upper surface of the second current collector, with the second separator interposed therebetween.

In an embodiment, the separator may be provided so as to cover the length of the first electrode sheet.

In an embodiment, after the stacking step, in the first electrode sheet, the first portion, the third portion, and the second portion may be defined in this order along the first direction, and in the separator, the first separator, the third separator, and the second separator may be defined in this order along the first direction.

In an embodiment, the first electrode may be a negative electrode and the first electrode sheet may be a negative electrode sheet, and the second electrode may be a positive electrode and the second electrode sheet may be a positive electrode sheet.

In an embodiment, the first electrode may be a positive electrode and the first electrode sheet may be a positive electrode sheet, and the second electrode may be a negative electrode and the second electrode sheet may be a negative electrode sheet.

In an embodiment, the first electrode sheet may further comprise first tab portions that protrude from the first electrode in the second direction intersecting the first direction, and the second electrode sheet may further comprise second tab portions that protrude from the second electrode in the second direction.

In an embodiment, in the first direction, the length of one of the first electrodes may be longer than the length of one of the second electrodes.

In an embodiment, the separator may be unwound and provided from a wound roll.

In an embodiment, the method may further comprise a step of further unwinding the separator from the roll to wrap around an outer surface of the electrode assembly.

According to another aspect of the present disclosure, there is provided an electrode assembly comprising: a first electrode sheet that comprises a first current collector and 2n first electrodes coated onto an upper surface of the first current collector in a first direction, wherein the first current collector has a non-coated portion defined between 2n first electrodes, a second electrode sheet that comprises a second current collector and n second electrodes that are respectively coated on the upper and lower surfaces of the second current collector so as to face each other along a first direction, wherein the second current collector has a non-coated portion defined between n second electrodes; and a separator disposed between the first electrode sheet and the second electrode sheet, wherein the second electrode sheet has a zigzag shape in which the non-coated portions are alternately bent and stacked in a clockwise direction and a counterclockwise direction. wherein the first electrode sheet comprises a first portion located in a lower part of the second electrode sheet with the separator interposed therebetween, a second portion located in an upper part of the second electrode sheet with the separator interposed therebetween, and a third portion for connecting the first portion and the second portion, wherein the first portion and the second portion are bent along the shape of the opposing second electrode sheet, and wherein the first electrode is aligned so as to face the second electrode with the separator interposed therebetween.

In an embodiment, the first portion may comprise n first electrodes among the 2n first electrodes, and the second portion may comprise the remaining n first electrodes among the 2n first electrodes.

In an embodiment, one end of the second electrode sheet may be exposed from the first electrode sheet, and the third portion may wrap around the other end of the second electrode sheet while connecting the first portion and the second portion.

In an embodiment, the first electrode sheet may further comprise first tab portions that protrude from the first electrode in the second direction intersecting the first direction, and the second electrode sheet may further comprise second tab portions that protrude from the second electrode in the second direction.

In an embodiment, the first electrode may be a negative electrode and the first electrode sheet may be a negative electrode sheet, and the second electrode may be a positive electrode and the second electrode sheet may be a positive electrode sheet.

In an embodiment, the first electrode may be a positive electrode and the first electrode sheet may be a positive electrode sheet, and the second electrode may be a negative electrode and the second electrode sheet may be a negative electrode sheet.

According to yet another aspect of the present disclosure, there is provided a stacked body comprising: a pair of first electrodes facing each other; a first current collector for connecting the pair of first electrodes facing each other; a second current collector provided between the pair of first electrodes facing each other; and second electrodes disposed on both surfaces of the second current collector, with the second current collector interposed therebetween.

According to a further aspect of the present disclosure, there is provided an electrode assembly comprising: a first stacked body including the stacked body; and a second stacked body disposed on the first stacked body, wherein the second stacked body comprises a pair of third electrodes facing each other and a pair of fourth electrodes facing each other, the first current collector extends into the second stacked body and comes into contact with the third electrodes, and the second current collector extends into the second stacked body and comes into contact with the fourth electrodes.

In an embodiment, the electrode assembly further comprises a separator, wherein the separator may be formed integrally with the first stacked body and the second stacked body.

### [Advantageous Effects]

According to specific embodiments, a stacked body and an electrode assembly of the present disclosure include an electrode sheet and a separator provided integrally with the current collector, and thus can improve electrical connectivity.

In the method for manufacturing an electrode assembly according to the present disclosure, the electrode assembly is manufactured by stacking and folding an electrode sheet formed integrally with a current collector and a separator, thereby maximizing the production rate of the electrode assembly.

The effects of the present disclosure are not limited to the effects mentioned above, and additional other effects not described above will be clearly understood from the description of the appended claims by those skilled in the art.

### [BRIEF DESCRIPTION OF THE DRAWINGS]

FIG. 1 shows an electrode assembly manufactured by a conventional stacking method.
FIG. 2 shows an electrode assembly manufactured by a conventional Z-stacking method.
FIG. 3 shows a flowchart of a method for manufacturing an electrode assembly according to an embodiment.
FIG. 4 is a plan view of a first electrode sheet according to an embodiment.
FIG. 5 is a cross-sectional view of a first electrode sheet according to an embodiment.
FIG. 6 is a plan view of a second electrode sheet according to an embodiment.
FIG. 7 is a cross-sectional view of a second electrode sheet according to an embodiment.
FIG. 8 shows one step of a method for manufacturing an electrode assembly according to an embodiment.
FIG. 9 shows one step of a method for manufacturing an electrode assembly according to an embodiment.
FIG. 10 shows one step of a method for manufacturing an electrode assembly according to an embodiment.
FIG. 11 shows an electrode assembly manufactured according to a method for manufacturing an electrode assembly according to an embodiment.
FIG. 12 shows an electrode assembly manufactured according to a method for manufacturing an electrode assembly according to an embodiment.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Further, throughout the specification, when a portion is referred to as "including" a certain component, it means that the portion can further include other components, without excluding the other components, unless otherwise stated.

Throughout the descriptions herein, the terms "in a plan view" indicate viewing an object from above, and the terms "in a cross-sectional view" indicate viewing a vertical cross section of an object from side.

Now, a method for manufacturing an electrode assembly according to an embodiment of the present disclosure and an electrode assembly according to an embodiment of the present disclosure will be described.

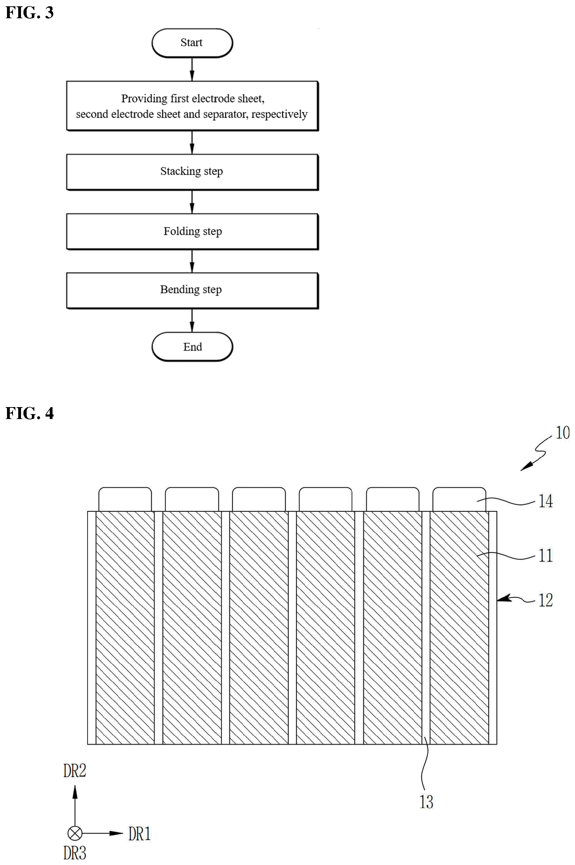

FIG. 3 shows a flowchart of a method for manufacturing an electrode assembly according to an embodiment.

Referring to FIG. 3, the method for manufacturing an electrode assembly of the present disclosure comprises a step of providing a first electrode sheet, a second electrode sheet, and a separator, respectively, a stacking step, a folding step, and a bending step.

The steps of providing the first electrode sheet, the second electrode sheet, and the separator, respectively, comprises a step of providing the first electrode sheet, a step of providing the second electrode sheet, and a step of providing the separator.

FIG. 4 is a plan view of a first electrode sheet according to an embodiment.

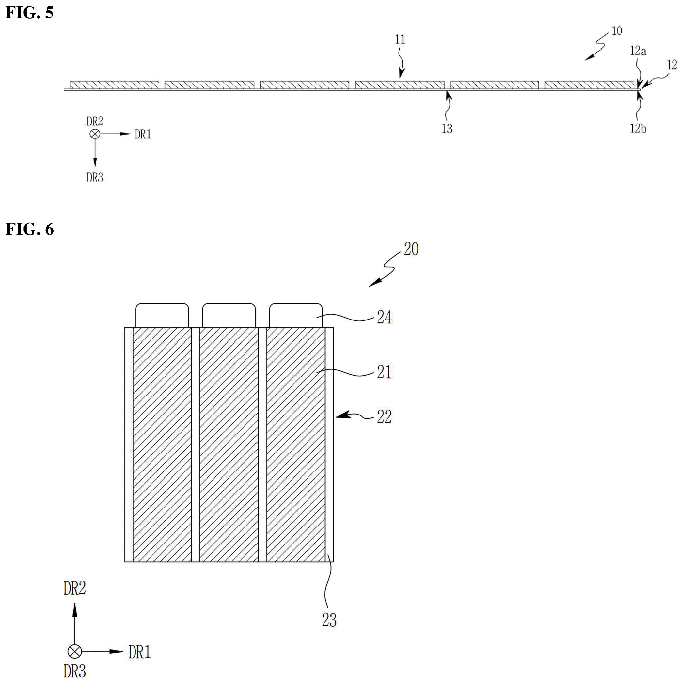

FIG. 5 is a cross-sectional view of a first electrode sheet according to an embodiment.

Referring to FIGS. 4 and 5 together, the step of providing a first electrode sheet 10 according to an embodiment is a step of providing a first electrode sheet 10 in which 2n first electrodes 11 are coated on the upper surface 12a of a first current collector 12 along a first direction DR1. In this specification, n is a natural number. Hereinafter, a case in which n is 3 is shown as an example, but the embodiments of the present disclosure are not limited thereto.

The first current collector 12 has a shape that extends along the first direction DR1, and is provided in the form of a sheet having an integral shape. Further, the first current collector 12 may include an upper surface 12a and a lower surface 12b facing the upper surface 12a in the third direction DR3. In the first electrode sheet 10, the first electrode 11 is coated only on one surface of the first current collector 12. As an example, a case where the first electrode 11 is coated on the upper surface 12a of the first current collector 12 is shown. Specifically, the first electrode 11 is coated on the upper surface 12a of the first current collector 12, with 2n units being spaced apart at predetermined intervals along the first direction DR1, which is the extension direction of the first current collector 12. Additionally, each first electrode 11 may have a shape that extends by a predetermined length along the second direction DR2. The portion of the first current collector 12 where the first electrode 11 is not coated is defined as a non-coated portion 13. The non-coated portion 13 includes the portion between the first electrodes 11. The non-coated portion 13 has a shape that extends by the same length as the first electrode 11 in the second direction DR2.

Further, the first electrode sheet 10 includes a first tab portion 14 that protrudes from the first electrode 11 in the second direction DR2. The first tab portion 14 is a portion being connected to the first current collector 12, and may be gathered and welded together in a subsequent process, and the electrode leads may be connected.

In an embodiment, the first electrode sheet 10 may be a negative electrode sheet. That is, the first electrode 11 may be a negative electrode, and may include a negative electrode active material, a binder, and optionally a conductive material. The first current collector 12 may be a negative electrode current collector.

However, the embodiments are not limited thereto, and in other embodiments, the first electrode sheet 10 may be a positive electrode sheet. That is, the first electrode 11 is a positive electrode including a positive electrode active material, a binder, and optionally a conductive material, and the first current collector 12 may be a positive electrode current collector.

Meanwhile, in this specification, the positive electrode current collector is not particularly limited as long as it has high conductivity without causing any chemical change in the battery, and for example, copper, stainless steel, aluminum, nickel, titanium, baked carbon, or copper or stainless steel whose surface is treated with carbon, nickel, titanium, silver, or the like, an aluminum-cadmium alloy, or the like may be used. The positive electrode current collector may typically have a thickness of 3 *µ*m or more and 500 *µ*m or less, preferably 10 *µ*m or more and 20 *µ*m or less. For example, the current collector may be used in various forms such as a film, a sheet, a foil, a net, a porous body, a foaming body, and a non-woven fabric structure.

As the positive electrode active material, a compound known in the art as being capable of reversible intercalation and deintercalation of lithium may be used without limitation.

Specifically, the positive electrode active material may be a lithium composite metal oxide containing lithium and one or more metals such as cobalt, manganese, nickel, or aluminum.

Specifically, examples of the lithium composite metal oxide may include lithium-iron-phosphorus-based oxide (e.g., Li₁₊ₐFe₁₋ₛMₛ(PO_{4-b})X_{b} (where M is one or more elements selected from Co, Ni, Al, Mg, Ti, and V, X is F, S, or N, and -0.5≤a≤+0.5, 0≤b≤0.1, 0≤s≤0.5), etc.), lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), lithium-manganese-cobalt-based oxide (e.g., LiCo_{1-Y2}Mn_{Y2}O₂ (where 0<Y2<1), LiMn₂-_{Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal(M) oxide (e.g., Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<s2<1, and p2+q2+r3+s2=1), etc.).

The negative electrode current collector is not particularly limited so long as it has conductivity without causing any chemical change in the battery, and for example, copper, stainless steel, aluminum, nickel, titanium, baked carbon, copper or stainless steel whose surface is treated with carbon, nickel, titanium, silver, or the like, an aluminum-cadmium alloy, or the like may be used. The thickness and shape of the other negative electrode current collector may be the same as or corresponding to those of the positive electrode current collector.

The negative electrode active material used may be a compound capable of reversible intercalation and deintercalation of lithium, and specific examples thereof may include a carbonaceous material such as artificial graphite, natural graphite, graphitized carbon fiber, and amorphous carbon, one or more carbon-based materials selected from the group consisting of carbon black, acetylene black, ketjen black, super P, graphene and fibrous carbon, Si-based materials, metal composite oxides such as LiₓFe₂O₃(0≤x≤1), LiₓWO₂(0≤x≤1), SnₓMe₁₋ₓMe'_{y}O_{z} (where Me: Mn, Fe, Pb, Ge; Me': Al, B, P, Si, Group 1, 2, 3 elements in the periodic table, halogen; 0<x≤1; 1≤y≤3; 1≤z≤8); lithium metal; metals such as Al, Cu, Ge, Si, Sn, etc.; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The binder is used to enhance a bonding force between the active material and the conductive material, as well as a bonding force to the current collector described below.

Non-limiting examples of the binder include polyvinylidene fluoride(PVDF), polytetrafluoroethylene(PTFE), polyvinyl alcohol(PVA), polyacrylic acid(PAA), polymethacrylic acid(PMA), polymethyl methacrylate(PMMA), polyacrylamide(PAM), polymethacrylamide, polyacrylonitrile(PAN), polymethacrylonitrile, polyimide(PI), alginic acid, alginate, chitosan, carboxymethylcellulose(CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber(SBR), fluorine rubber, various copolymers thereof, and the like.

The conductive material is used to further improve the conductivity of the active material. The conductive material is not particularly limited as long as it has conductivity without causing chemical changes in the battery, and for example, graphite such as natural graphite or artificial graphite; carbon black such as carbon black, acetylene black, ketjen black, channel black, furnace black, lamp black, and thermal black; carbon-based materials such as carbon fibers, single-walled carbon nanotubes, and multi-walled carbon nanotubes; metal powder or metal fiber, such as copper, nickel, aluminum, or silver; conductive fibers; conductive whiskers such as zinc oxide or potassium titanate; conductive metal oxides such as titanium oxide; or conductive polymers such as polyphenylene derivatives may be used.

FIG. 6 is a plan view of a second electrode sheet according to an embodiment.

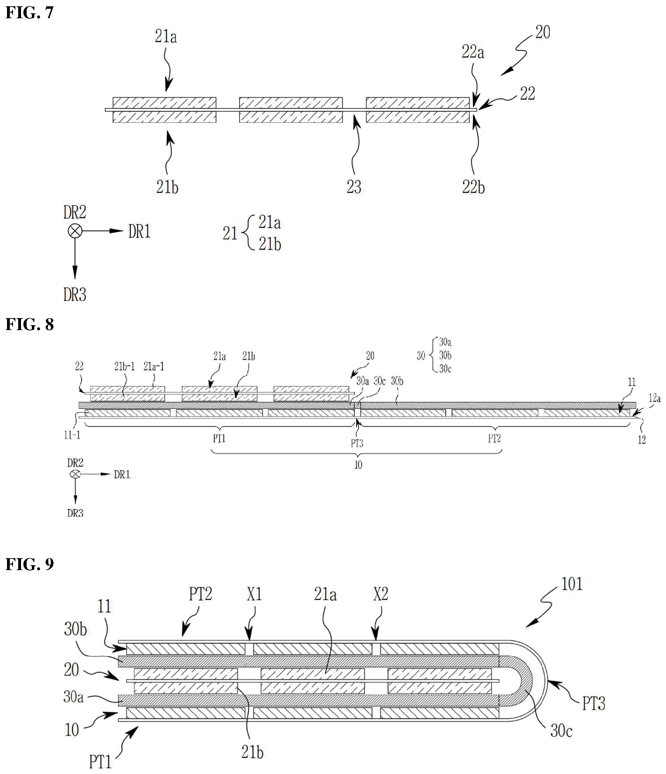

FIG. 7 is a cross-sectional view of a second electrode sheet according to an embodiment.

Referring to FIGS. 6 and 7 together, the step of providing a second electrode sheet 20 is a step of providing a second electrode sheet 20 in which n second electrodes 21 are respectively coated onto both surfaces of the second current collector 22 along a first direction DR1. n is a natural number.

The second current collector 22 has a shape that extends along the first direction DR1, and is provided in the form of a sheet having an integral shape. Further, the second current collector 22 may include an upper surface 22a and a lower surface 22b facing the upper surface 22a in the third direction DR3. In the second electrode sheet 20, the second electrode 21 is coated on both surfaces 22a, 22b of the second current collector 22. Specifically, the second electrode 21 is coated on each of both surfaces 22a, 22b of the second current collector 22, with n units being spaced apart at predetermined intervals along the first direction DR1. That is, n second electrodes 21a are coated on the upper surface 22a of the second current collector 22, and n second electrodes 21b are coated on the lower surface 22b of the second current collector 22. The second electrode 21 may have a shape that extends by a predetermined length along the second direction DR2. The portion of the second current collector 22 where the second electrode 21 is not coated is defined as a non-coated portion 23. The non-coated portion 23 includes the portion between the second electrodes 21. The non-coated portion 23 has a shape that extends by the same length as the second electrode 21 in the second direction DR2.

Further, the second electrode sheet 20 includes a second tab portion 24 that protrudes from the second electrode 21 in the second direction DR2. The second tab portions 24 are portions being connected to the second current collector 22, and may be gathered and welded together in a subsequent process, and the electrode leads may be connected.

The step of providing a separator is a step of winding the separator onto a roll and then unwinding it. Although not shown in the figures, the separator described herein is in a state where its ends are wound onto a roll, and it may also be provided in a wound-up configuration. However, the embodiment is not limited thereto, and the separator may also be pre-cut to the required length and provided.

After the steps of providing the first electrode sheet 10, the second electrode sheet 20, and the separator as described above, a step of stacking the first electrode sheet 10, the second electrode sheet 20, and the separator is performed.

FIG. 8 shows one step of a method for manufacturing an electrode assembly according to an embodiment.

Referring to FIG. 8, the stacking step is a step of stacking the first electrode sheet 10, the separator 30 and the second electrode sheet 20 in this order. In the stacking step, the 1st-second electrodes 21a-1, 21b-1 of the second electrode sheet 20 is aligned with the 1st-first electrode 11-1 of the first electrode sheet 10. In this specification, "the electrode A and the electrode B are aligned" means that the center of the electrode A and the center of the electrode B are placed on the same line in the third direction DR3. That is, in the stacking step, the center of the 1st-first electrode 11-1 and the center of the 1st-second electrodes 21a-1, 21b-1 of the second electrode sheet 20 are placed on the same line. Additionally, in the stacking step, the n second electrodes 21, each of which is disposed on both surfaces 22a, 22b of the second current collector 22, are aligned with n first electrodes 11 among the 2n first electrodes 11 of the first electrode sheet 10.

Meanwhile, in an embodiment, when the first electrode sheet 10 is a negative electrode sheet and the second electrode sheet 20 is a positive electrode sheet, the length of one first electrode 11 in the first direction DR1may be longer than that of one second electrode 21. However, the first electrode 11 and the second electrode 21 are aligned based on the centers of the first electrode 11 and the second electrode 21 so that the electrodes may face each other.

In the stacking step, the upper surface 12a of the first current collector 12 is stacked so as to face the separator 30. That is, the first electrode 11 of the first electrode sheet 10 faces the separator 30. Thereby, the first electrode 11 and the second electrode 21b located in a lower part of the second electrode sheet 20 face each other with the separator 30 interposed therebetween.

In the stacking step, the separator 30 is unwound and provided so as to cover the length of the first electrode sheet 10.

Meanwhile, since the first electrode sheet 10 includes 2n first electrodes 11 on one surface thereof and the second electrode sheet 20 includes n second electrodes 21 on one surface thereof, as shown in FIG. 8, a portion of the first electrode sheet 10 overlaps with the second electrode sheet 20, and the remaining portion of the first electrode sheet 10 does not overlap with the second electrode sheet 20.

Thereby, after the stacking step, the first electrode sheet 10 includes a first portion PT1, a second portion PT2, and a third portion PT3. Specifically, the first electrode sheet 10, the first portion PT1, the third portion PT3 and the second portion PT2 are defined in this order along the first direction DR1.

The first portion PT1 is a portion that overlaps with the second electrode sheet 20 on a plane and includes n first electrodes 11 among 2n first electrodes 11. Specifically, the first portion PT1 includes n consecutive first electrodes 11, including the 1st-first electrode 11-1. The second portion PT2 is a portion that includes the remaining n first electrodes 11 among the 2n first electrodes 11. The third portion PT3 is a portion that connects the first portion PT1 and the second portion PT2 and is not coated with the first electrodes 11. In Fig. 8, as an example, a first portion PT1 is shown, which includes three consecutive first electrodes 11 including the 1st-first electrode 11-1 in the first electrode sheet 10. Also shown is a second portion PT2 that includes the remaining three first electrodes 11 among the six first electrodes 11 which are not included in the first portion PT1.

The first portion PT1, the third portion PT3, and the second portion PT2 have substantially an integral shape that extends from one another. For the purpose of explaining the folding step described below, the first electrode sheet 10 will be described as including the first portion PT1, the second portion PT2, and the third portion PT3.

After the stacking step, the separator 30 includes a first separator 30a, a second separator 30b, and a third separator 30c. Specifically, in the separator 30, a first separator 30a, a third separator 30c, and a second separator 30b are defined in this order along the first direction DR1.

The first separator 30a, the second separator 30b, and the third separator 30c are portions that overlap with the first portion PT1, the second portion PT2, and the third portion PT3 of the first electrode sheet 10 on a plane, respectively.

The first separator 30a, the second separator 30b, and the third separator 30c have substantially an integral shape that extends from each other, and are described as such for the purpose of explaining the folding step described below.

The folding step is performed after the stacking step.

FIG. 9 shows one step of a method for manufacturing an electrode assembly according to an embodiment.

Referring to FIG. 9, the folding step is a step of folding the third portion PT3 and the third separator 30c together and locating the second separator 30b and the second portion PT2 on the second electrode sheet 20 to thereby form a folded-stacked body 101.

In the folded-stacked body 101, the n first electrodes 11 coated on the first portion PT1 face the n second electrodes 21b coated on a lower surface of the second electrode sheet 20, with the first separator 30a interposed therebetween. The n first electrodes 11 coated on the second portion PT2 face the n second electrodes 21a coated on the upper surface of the second electrode sheet 20, with the second separator 30b interposed therebetween.

Additionally, the folded-stacked body 101 includes bent portions X1, X2. The bent portions X1, X2 are defined as the portions where the non-coated portions 13 (see FIG. 5) formed on the first portion PT1, the non-coated portions 23 (see FIG. 7) formed on the second electrode sheet 20, and the non-coated portions 13 (see FIG. 5) formed on the second portion PT2 overlap with each other on a plane.

The bending step is performed after the folding step.

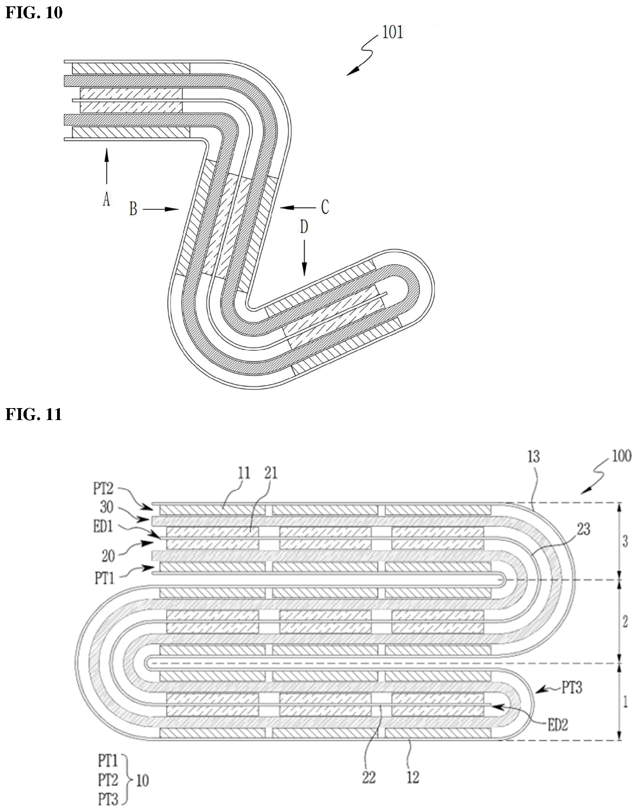

FIG. 10 shows one step of a method for manufacturing an electrode assembly according to an embodiment.

Referring to FIGS. 9 and 10 together, a bending step is a bending step of alternately bending the bent portions X1, X2 of the folded-stacked body 101 in a clockwise and counterclockwise direction to form an electrode assembly 100. In FIG. 10, the first bent portion X1 is bent in the clockwise direction, and the second bent portion X2 is bent in the counterclockwise direction . Through the bending step, the folded-stacked body 101 can be folded and stacked in a zigzag pattern, while the surface A is abutted on the surface B, and the surface C is abutted on the surface D.

FIG. 11 shows an electrode assembly manufactured according to a method for manufacturing an electrode assembly according to an embodiment. Referring to FIGS. 10 and 11 together, a folded-stacked body 101 is bent to form an electrode assembly 100.

An electrode assembly of the present disclosure comprises:
a first electrode sheet that comprises a first current collector and 2n first electrodes coated onto an upper surface of the first current collector in a first direction, wherein the first current collector has a non-coated portion defined between 2n first electrodes,
a second electrode sheet that comprises a second current collector and n second electrodes that are respectively coated on the upper and lower surfaces of the second current collector so as to face each other along a first direction, wherein the second current collector has a non-coated portion defined between n second electrodes; and
a separator disposed between the first electrode sheet and the second electrode sheet,
wherein the second electrode sheet has a zigzag shape in which the non-coated portions are alternately bent and stacked in a clockwise direction and a counterclockwise direction.
wherein the first electrode sheet comprises a first portion facing a lower surface of the second electrode sheet with the separator interposed therebetween, a second portion facing an upper surface of the second electrode sheet with the separator interposed therebetween, and a third portion for connecting the first portion and the second portion,
wherein the first portion and the second portion are bent along the shape of the opposing second electrode sheet, and
wherein the first electrode is aligned so as to face the second electrode with the separator interposed therebetween.

Referring to FIG. 11, an electrode assembly 100 of an embodiment includes a first electrode sheet 10, a second electrode sheet 20, and a separator 30 located between the first electrode sheet 10 and the second electrode sheet 20.

The second electrode sheet 20 has a zigzag shape in which the non-coated portions 23 are alternately bent in a clockwise direction and a counterclockwise direction.

The first electrode sheet 10 includes a first portion PT1, a second portion PT2, and a third portion PT3. The first portion PT1 is located in a lower part of the second electrode sheet 20 with the separator 30 interposed therebetween. The second portion PT2 is located in an upper part of the second electrode sheet 20 with the separator 30 interposed therebetween. The third portion PT3 connects the first portion PT1 and the second portion PT2.

Further, as described above with reference to FIGS. 3 to 10, the first portion PT1 is a portion that includes n first electrodes 11 among the 2n first electrodes 11, and faces the lower surface 22b of the second current collector 22 of the second electrode sheet 20. The second portion PT2 is a portion that includes the remaining n first electrodes 11 among the 2n first electrodes 11, and faces the upper surface 22a of the second current collector 22 of the second electrode sheet 20. The third portion PT3 connects the first portion PT1 and the second portion PT2, but is a portion where the first electrodes 11 are not coated.

As shown in FIG. 11, the first portion PT1 and the second portion PT2 are bent along the shape of the opposing second electrode sheet 20. Specifically, the non-coated portions 13 of the first portion PT1 and the second portion PT2 are portions where the non-coated portion 13 is bent along the shape of the second electrode sheet 20.

Therefore, one end ED1 of the second electrode sheet 20 is exposed from the first electrode sheet 10, and the other end ED2 of the second electrode sheet 20 is wrapped by the third portion PT3.

Furthermore, the first electrodes 11 of the first electrode sheet 10 are aligned so as to face the second electrodes 21 of the second electrode sheet 20 with the separator 30 interposed therebetween. In addition, with regard to the configuration previously described among those shown in FIG. 11, the above-mentioned contents are applied similarly, and detailed descriptions thereof are omitted.

The electrode assembly of the present disclosure comprises a first electrode sheet 10 having a single-side coated first electrode 11, a second electrode sheet 20 having a double-sided coated second electrode 21, and a separator 30, and is manufactured by stacking the first electrode sheet 10 so as to wrap around both surfaces of the second electrode sheet 20 with the separator 30 interposed therebetween, and then folding the stacked body in a zigzag shape. Because the first current collector 12 is integrally provided on the first electrode sheet 10 and the second current collector 22 is integrally provided on the second electrode sheet 20, the path through which electrons move can be further widened through each tab portions 14, 24. Consequently, the resistance is lowered, which may be advantageous for output, charging speed, and heat generation amount when applied to a battery. Furthermore, the first tab portions 14 of the first electrode sheet 10 are connected to each other by the first current collector 12, and the second tab portions 24 of the second electrode sheet 20 are connected to each other by the second current collector 22. Therefore, even if some of the tab portions are damaged during the process of gathering and welding the first tab portions 14 and gathering and welding the second tab portions 24, it is possible to maintain electrical connectivity without deterioration.

Further, an electrode assembly 100 of an embodiment may include a first stacked body 1 and a second stacked body 2.

The first stacked body 1 comprises:
a pair of first electrodes 11 facing each other;
a first current collector 12 for connecting the pair of first electrodes 11 facing each other;
a second current collector 22 provided between the pair of first electrodes 11 facing each other; and
second electrodes 21 disposed on both surfaces of the second current collector 22, with the second current collector 22 interposed therebetween.

A second stacked body 2 is disposed on the first stacked body 1.

The second stacked body 2 comprises a pair of third electrodes facing each other and a pair of fourth electrodes facing each other,
the first current collector 12 extends into the second stacked body 2 and comes into contact with the third electrodes, and
the second current collector 22 extends into the second stacked body 2 and comes into contact with the fourth electrodes.

In the second stacked body 2, the third electrode is the same type of electrode as the first electrode 11, and the fourth electrode is the same type of electrode as the second electrode 21.

The electrode assembly 100 may further include a third stacked body 3.

The third stacked body 3 is disposed on the second stacked body 2.

The third stacked body 3 includes a pair of fifth electrodes facing each other and a pair of sixth electrodes facing each other.
the first current collector 12 extends into the third stacked body 3 and comes into contact with the fifth electrodes, and
the second current collector 22 extends into the fourth stack 3 and comes into contact with the sixth electrodes.

In the third stacked body 3, the fifth electrodes are the same type of electrode as the first electrode 11, and the sixth electrodes are the same type of electrode as the second electrode 21.

The electrode assembly 100 may further include a separator 30.

The separator 30 may be formed integrally with the first stacked body 1 and the second stacked body 2, or may be formed integrally with the first stacked body 1, the second stacked body 2, and the third stacked body 3. The first electrode 11 and the second electrode 21 face each other with a separator 30 interposed therebetween, the third electrode and the fourth electrode face each other, and the fifth electrode and the sixth electrode face each other.

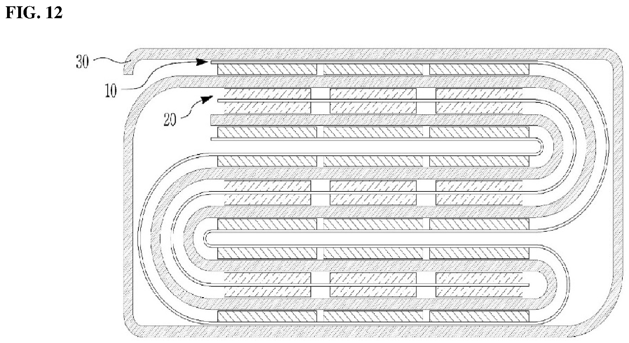

FIG. 12 shows an electrode assembly manufactured according to a method for manufacturing an electrode assembly according to an embodiment.

Referring to FIG. 12, an electrode assembly 100 according to an embodiment may have a structure in which a separator 30 wraps around the outer surface. Specifically, the separator 30 may be unwound and provided from a roll so as to wrap around the electrode assembly 100 of FIG. 11. By having such a structure, it is possible to protect the first electrode sheet 10 located at the outermost layer.

The method for manufacturing an electrode assembly of the present disclosure can be manufactured by stacking a first electrode sheet, which has an integrated current collector and a single-sided electrode coating, with a separator interposed therebetween, and wrapping around a second electrode sheet, which has an integrated current collector and a double-sided electrode coating, followed by zigzag folding. Therefore, it is possible to provide a method for manufacturing an electrode assembly with simplified processes.

Furthermore, the electrode assembly of the present disclosure may improve electrical connectivity between the tab portions of each electrode sheet as the current collectors of each electrode sheet are integrated.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: electrode assembly
101: folded-stacked body
10: first electrode sheet
11: first electrode
12: first current collector
13: non-coated portion
20: second electrode sheet
21: second electrode
22: second current collector
23: non-coated portion
30: separator
PT1: first portion
PT2: second portion
PT3: third portion

## Claims

1. A method for manufacturing an electrode assembly, the method comprising:
a step of providing a first electrode sheet coated in which 2n first electrodes are coated on an upper surface of a first current collector along a first direction,
a step of providing a second electrode sheet in which n second electrodes are respectively coated on both the upper and lower surfaces of the second current collector so as to face each other along the first direction;
a step of providing a separator;
a stacking step of sequentially stacking a first electrode sheet, a separator, and a second electrode sheet, wherein the 1st-second electrode of the second electrode sheet is aligned with the 1st-first electrode of the first electrode sheet, and the upper surface of the first current collector faces the separator;
wherein after the stacking step,
the first electrode sheet comprises:
a first portion that overlaps with the second electrode sheet on a plane, and includes n first electrodes among the 2n first electrodes;
a second portion that includes the remaining n first electrodes among the 2n first electrodes; and
a third portion that connects the first portion and the second portion and is not coated with the first electrodes, and
wherein the separator comprises a first separator overlapping with the first portion on a plane, a second separator overlapping with the second portion, and a third separator overlapping with the third portion;
after the stacking step, a folding step of folding the third portion and the third separator together and locating the second separator and the second portion on the second electrode sheet to thereby form a folded-stacked body; and
wherein the folded-stacked body comprises bent portions, the bent portions being defined as portions where the non-coated portions between the n first electrodes of the first portion, the non-coated portions between the n second electrodes of the second electrode sheet, and the non-coated portions between the n first electrodes of the second portion overlap with each other on a plane,
after the folding step, a bending step of alternately bending the bent portions of the folded-stacked body in a clockwise direction and a counterclockwise direction to form an electrode assembly.

2. The method for manufacturing an electrode assembly according to claim 1,
wherein in the bending step, the electrode assembly is one in which the bent portions are bent so that the folded-stacked body are folded in a zigzag shape.

3. The method for manufacturing an electrode assembly according to claim 1,
wherein in the folded-stacked body, the n first electrodes coated on the first portion face the n second electrodes coated on the lower surface of the second current collector, with the first separator interposed therebetween, and
the n first electrodes coated on the second portion face the n second electrodes coated on the upper surface of the second current collector, with the second separator interposed therebetween.

4. The method for manufacturing an electrode assembly according to claim 1,
wherein the separator is provided so as to cover the length of the first electrode sheet.

5. The method for manufacturing an electrode assembly according to claim 1,
wherein after the stacking step,
in the first electrode sheet, the first portion, the third portion, and the second portion are defined in this order along the first direction, and
in the separator, the first separator, the third separator, and the second separator are defined in this order along the first direction.

6. The method for manufacturing an electrode assembly according to claim 1,
wherein the first electrode is a negative electrode and the first electrode sheet is a negative electrode sheet, and
the second electrode is a positive electrode and the second electrode sheet is a positive electrode sheet.

7. The method for manufacturing an electrode assembly according to claim 1,
wherein the first electrode is a positive electrode and the first electrode sheet is a positive electrode sheet, and
the second electrode is a negative electrode and the second electrode sheet is a negative electrode sheet.

8. The method for manufacturing an electrode assembly according to claim 1,
wherein the first electrode sheet further comprises first tab portions that protrude from the first electrode in the second direction intersecting the first direction, and
the second electrode sheet further comprises second tab portions that protrude from the second electrode in the second direction.

9. The method for manufacturing an electrode assembly according to claim 1,
wherein in the first direction, the length of one of the first electrodes is longer than the length of one of the second electrodes.

10. The method for manufacturing an electrode assembly according to claim 1,
wherein the separator is unwound and provided from a wound roll.

11. The method for manufacturing an electrode assembly according to claim 10,
further comprising a step of further unwinding the separator from the roll to wrap around an outer surface of the electrode assembly.

12. An electrode assembly comprising:
a first electrode sheet that comprises a first current collector and 2n first electrodes coated onto an upper surface of the first current collector in a first direction, wherein the first current collector has a non-coated portion defined between 2n first electrodes,
a second electrode sheet that comprises a second current collector and n second electrodes that are respectively coated on the upper and lower surfaces of the second current collector so as to face each other along a first direction, wherein the second current collector has a non-coated portion defined between n second electrodes; and
a separator disposed between the first electrode sheet and the second electrode sheet,
wherein the second electrode sheet has a zigzag shape in which the non-coated portions are alternately bent and stacked in a clockwise direction and a counterclockwise direction.
wherein the first electrode sheet comprises a first portion located in a lower part of the second electrode sheet with the separator interposed therebetween, a second portion located in an upper part of the second electrode sheet with the separator interposed therebetween, and a third portion for connecting the first portion and the second portion,
wherein the first portion and the second portion are bent along the shape of the opposing second electrode sheet, and
wherein the first electrode is aligned so as to face the second electrode with the separator interposed therebetween.

13. The electrode assembly according to claim 12,
wherein the first portion comprises n first electrodes among the 2n first electrodes, and the second portion comprises the remaining n first electrodes among the 2n first electrodes.

14. The electrode assembly according to claim 12,
wherein one end of the second electrode sheet is exposed from the first electrode sheet, and
the third portion wraps around the other end of the second electrode sheet while connecting the first portion and the second portion.

15. The electrode assembly according to claim 12,
wherein the first electrode sheet further comprises first tab portions that protrude from the first electrode in the second direction intersecting the first direction, and
the second electrode sheet further comprises second tab portions that protrude from the second electrode in the second direction.

16. The electrode assembly according to claim 12,
wherein the first electrode is a negative electrode and the first electrode sheet is a negative electrode sheet, and
the second electrode is a positive electrode and the second electrode sheet is a positive electrode sheet.

17. The electrode assembly according to claim 12,
wherein the first electrode is a positive electrode and the first electrode sheet is a positive electrode sheet, and
the second electrode is a negative electrode and the second electrode sheet is a negative electrode sheet.

18. A stacked body comprising:
a pair of first electrodes facing each other;
a first current collector for connecting the pair of first electrodes facing each other;
a second current collector provided between the pair of first electrodes facing each other; and
second electrodes disposed on both surfaces of the second current collector, with the second current collector interposed therebetween.

19. An electrode assembly comprising:
a first stacked body including a stacked body according to claim 18; and
a second stacked body disposed on the first stacked body,
wherein the second stacked body comprises a pair of third electrodes facing each other and a pair of fourth electrodes facing each other,
the first current collector extends into the second stacked body and comes into contact with the third electrodes, and
the second current collector extends into the second stacked body and comes into contact with the fourth electrodes.

20. The electrode assembly according to claim 19,
further comprising a separator,
wherein the separator is formed integrally with the first stacked body and the second stacked body.
